# EUROPÄISCHE PATENTANMELDUNG

(11) **EP 4 621 002 A2**
(43) Veröffentlichungstag der Anmeldung: **24.09.2025**
(21) Anmeldenummer: 25163636.1
(22) Anmeldetag: 13.03.2025
(51) Int. Cl.: C08J 9/00, C08J 9/232, C08J 9/35, E04B 1/84, G10K 11/162

(54) **SELBSTTRAGENDES SCHALLSCHUTZFORMTEIL**

(30) Priorität: 22.03.2024 DE 102024108348
(71) Anmelder: Cellofoam GmbH & Co. KG, 88400 Biberach (DE)
(72) Erfinder: STEHLING, Holger, 88400 Biberach (DE)
(74) Vertreter: Patentship Patentanwaltsgesellschaft mbH

(57) **Zusammenfassung**

Die vorliegende Erfindung betrifft ein selbsttragendes Schallschutzformteil (100) zur Schallabsorption, umfassend ein Trägermaterial (101) aus Partikelschaumstoff, wobei in dem Trägermaterial (101) offenzellige Schaumstoffflocken (103) und/oder Schwerfolienpartikel verteilt und eingebettet sind, wobei die offenzelligen Schaumstoffflocken (103) Polypropylen (PP), Polyurethan (PU), Polyethylen (PE), Melaminharzschaum und Mischungen davon umfassen, und/oder wobei die Schwerfolienpartikel Bitumen und/oder gefülltes Elastomer umfassen.

## Beschreibung

Die vorliegende Erfindung betrifft ein selbsttragendes Schallschutzformteil zur Schallabsorption, insbesondere ein selbsttragendes Schallschutzformteil zur Schallabsorption, umfassend ein Trägermaterial aus Partikelschaumstoff, wobei in dem Trägermaterial offenzellige Schaumstoffflocken und/oder Schwerfolienpartikel verteilt und eingebettet sind, wobei die offenzelligen Schaumstoffflocken Polypropylen (PP), Polyurethan (PU), Polyethylen (PE), Melaminharzschaum und Mischungen davon umfassen, und wobei die Schwerfolienpartikel Bitumen und/oder gefülltes Elastomer umfassen.

Schallschutzformteile zur Schallabsorption werden in einer Vielzahl von technischen Gebieten eingesetzt, um in der Umgebung von Schall emittierenden Schallquellen eine Schallreduktion zu erreichen und Personen vor den Auswirkungen von potentiell gesundheitsbeeinträchtigendem Schall zu schützen. Schallschutzformteile werden somit nicht nur im Automobilbau eingesetzt, sondern auch im Gebäudebau, sowie in der Abschirmung von schallemittierenden Maschinen, beispielsweise zur Schallabschirmung von Heizungs-, Lüftungs- und Klimaanlagen-Bauteilen (HVAC-Bauteilen).

Herkömmlich verwendete und oftmals in der Form nicht stabile Schallschutzmaterialien weisen hierbei den Nachteil auf, dass diese oftmals nur schwer in eine für den spezifischen Anwendungsfall geeignete formstabile Form gebracht werden können und daher oftmals nicht einstückig, sondern als mehrstückige Komposite, umfassend eine Vielzahl von unterschiedlichen Materialien, bereitgestellt werden können. Zudem ist der schallabsorbierende Effekt von herkömmlich verwendeten Schallschutzmaterialien oftmals nur minimal, so dass ein Bedarf an wirksamen Schallschutzmaterialien besteht, welche vorteilhaft als selbsttragende Formteile bereitgestellt werden können.

In der Druckschrift EP 1 315 638 B1 ist beispielsweise ein Bodenbelag offenbart, welcher aus zumindest drei unterschiedlichen Schichten gebildet ist.

In der Druckschrift EP 1 161 360 B1 ist beispielsweise eine Durchbrechungen aufweisende Schallschutzplatte zur Verwendung im Fahrzeugbau offenbart.

Es ist die der Erfindung zugrundeliegende Aufgabe, ein selbsttragendes Schallschutzformteil bereitzustellen, das eine wirksame Schallabsorption bereitstellt und eine vorteilhafte Formstabilität aufweist.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein selbsttragendes Schallschutzformteil zur Schallabsorption gelöst, umfassend ein Trägermaterial aus Partikelschaumstoff, wobei in dem Trägermaterial offenzellige Schaumstoffflocken und/oder Schwerfolienpartikel verteilt und eingebettet sind, wobei die offenzelligen Schaumstoffflocken Polypropylen (PP), Polyurethan (PU), Polyethylen (PE), Melaminharzschaum und Mischungen davon umfassen, und/oder wobei die Schwerfolienpartikel Bitumen und/oder gefülltes Elastomer umfassen.

Dadurch wird beispielsweise der technische Vorteil erreicht, dass das entsprechende Verbundmaterial gemäß dem ersten Aspekt die hervorragenden schallabsorbierenden Eigenschaften der offenzelligen Schaumstoffflocken mit der Formstabilität des Trägermaterials in einem einzigen Hybridmaterial, bzw. Verbundmaterial vereint.

Somit kann das selbsttragende Schallschutzformteil ausschließlich aus dem Verbundmaterial gemäß dem ersten Aspekt gefertigt werden, und müssen keine weiteren Materialien zur Verbesserung der strukturellen Stabilität des selbsttragenden Schallschutzformteils oder zur Verbesserung der schallabsorbierenden Eigenschaften des selbsttragenden Schallschutzformteils verwendet werden.

Das selbsttragende Schallschutzformteil gemäß dem ersten Aspekt ist selbstragend, was bedeutet, dass das Verbundmaterial des Schallschutzformteils selbst die Formstabilität des selbsttragenden Schallschutzformteils bereitstellt. Somit sind insbesondere neben dem verwendeten Trägermaterial und den offenzelligen Schaumstoffflocken keine weiteren stabilisierenden Elemente oder Materialien in dem selbsttragenden Schallschutzformteil notwendig, um die Formstabilität des selbsttragenden Schallschutzformteils zu erreichen.

Insbesondere ist das selbsttragende Schallschutzformteil einstückig ausgebildet, was bedeutet, dass das selbsttragende Schallschutzformteil lediglich ein einziges Bauteil umfasst, und insbesondere nicht aus einer Mehrzahl von unterschiedlichen miteinander verbundenen Bauteilen besteht.

Insbesondere umfasst das Trägermaterial des selbsttragenden Schallschutzformteils ausschließlich Partikelschaumstoff.

Insbesondere sind in dem Trägermaterial des selbsttragenden Schallschutzformteils ausschließlich offenzellige Schaumstofflocken eingebettet.

Insbesondere sind in dem Trägermaterial des selbsttragenden Schallschutzformteils ausschließlich Schwerfolienpartikel eingebettet.

Insbesondere sind in dem Trägermaterial des selbsttragenden Schallschutzformteils offenzellige Schaumstofflocken und Schwerfolienpartikel eingebettet.

Insbesondere umfassen die Schwerfolienpartikel ausschließlich Bitumen.

Insbesondere umfassen die Schwerfolienpartikel ausschließlich gefülltes Elastomer.

Insbesondere umfassen die Schwerfolienpartikel ausschließlich Bitumen und gefülltes Elastomer.

Somit kann durch das Verbundmaterial des selbsttragenden Schallschutzformteils gemäß dem ersten Aspekt ein formstabiles und schallabsorbierendes Bauteil hergestellt werden, welches in einer Vielzahl von schallabsorbierenden Anwendungen, wie beispielsweise im Automobilbau, im Gebäudebau, sowie in der Abschirmung von schallemittierenden Maschinen, beispielsweise zur Schallabschirmung von Heizungs-, Lüftungs- und Klimaanlagen-Bauteilen (HVAC-Bauteilen) eingesetzt werden kann.

In einer vorteilhaften Ausführungsform ist der Partikelschaumstoff ausgewählt aus der Gruppe umfassend expandiertes Polypropylen (EPP), expandiertes Polyethylen (EPE), expandiertes Polystyrol (EPS), expandiertes thermoplastisches Polyurethan (E-TPU), expandiertes thermoplastisches Polyolefin (E-TPO), eine Mischung aus expandiertem Polystyrol (EPS) und Polyethylen (PE), eine Mischung aus expandiertem Polystyrol (EPS) und Polypropylen (PP), eine Mischung aus expandiertem Polypropylen (EPP) und expandiertem Polyethylen (EPE), sowie Mischungen davon.

Dadurch wird der technische Vorteil erreicht, dass durch die genannten Materialien des Partikelschaumstoffs wirksame Eigenschaften des Trägermaterials des selbsttragenden Schallschutzformteils sichergestellt werden können.

In einer vorteilhaften Ausführungsform umfassen die als gefüllte Elastomere ausgewählten Schwerfolienpartikel zumindest ein Elastomer, in welches Füllstoffe, bevorzugt anorganische Füllstoffe, weiter bevorzugt Ruß, Silica, Aluminiumhydroxid und/oder Magnesiumhydroxid, eingebracht sind.

Dadurch wird der technische Vorteil erreicht, dass durch die genannten Materialien wirksame Eigenschaften des Trägermaterials des selbsttragenden Schallschutzformteils sichergestellt werden können.

In einer vorteilhaften Ausführungsform weisen die Schwerfolienpartikel eine Partikelgröße zwischen 3 mm und 12 mm auf, und/oder weisen die Schwerfolienpartikel eine Dichte zwischen 1800 kg/m³ und 2300 kg/m³ auf.

Dadurch wird der technische Vorteil erreicht, dass ein vorteilhaftes selbsttragendes Schallschutzformteil bereitgestellt werden kann.

In einer vorteilhaften Ausführungsform weisen die offenzelligen Schaumstoffflocken jeweils eine Vielzahl von offenen Schaumstoffzellen auf, welche diffusionsoffen mit einem Außenbereich der offenzelligen Schaumstoffflocken verbunden sind.

Dadurch wird der technische Vorteil erreicht, dass sich in dem Außenbereich der jeweiligen offenzelligen Schaumstoffflocken ausbreitende Schallwellen in die offenen Zellen der Schaumstoffflocken eindringen können, so dass die durch die Schallwellen vermittelte Energie in den offenen Zellen zumindest zum Teil an das Material der Wandung abgegeben werden kann, wodurch eine besonders wirksame Schalldissipation erreicht wird.

In einer vorteilhaften Ausführungsform sind die offenzelligen Schaumstoffflocken und/oder Schwerfolienpartikel mit dem Trägermaterial verbunden, insbesondere stoffschlüssig verbunden und/oder eingebettet.

Dadurch wird der technische Vorteil erreicht, dass ein wirksamer Verbund zwischen den offenzelligen Schaumstoffflocken und dem Trägermaterial bereitgestellt werden kann.

In einer vorteilhaften Ausführungsform weisen die offenzelligen Schaumstoffflocken jeweils einen Durchmesser zwischen 3 mm und 12 mm auf.

Dadurch wird der technische Vorteil erreicht, dass die entsprechenden Durchmesser besonders wirksame schallabsorbierende Eigenschaften der offenzelligen Schaumstoffflocken und ermöglichen.

In einer vorteilhaften Ausführungsform weist das selbsttragende Schallschutzformteil eine schallabsorbierende Oberfläche auf, welche insbesondere zu einer Schallquelle ausrichtbar ist, wobei an der schallabsorbierenden Oberfläche insbesondere der Flächenanteil der offenzelligen Schaumstoffflocken und/oder Schwerfolienpartikel in dem Trägermaterial zwischen 6% und 25% beträgt.

Dadurch wird der technische Vorteil erreicht, dass der entsprechende Flächenanteil der offenzelligen Schaumstoffflocken und/oder Schwerfolienpartikel in dem Trägermaterial an der schallabsorbierenden Oberfläche eine ausreichend wirksame Schallabsorption durch die offenzelligen Schaumstoffflocken und/oder Schwerfolienpartikel ermöglicht.

In einer vorteilhaften Ausführungsform weisen die offenzelligen Schaumstoffflocken eine Dichte von 6 kg/m³ bis 60 kg/m³ auf.

Dadurch wird der technische Vorteil erreicht, dass die entsprechenden Dichten der offenzelligen Schaumstoffflocken vorteilhafte Schallabsorptionseigenschaften des Verbundmaterials gewährleisten.

In einer vorteilhaften Ausführungsform weist das selbsttragende Schallschutzformteil einen gemäß der Norm DIN 10 534-2 bei einer Frequenz von 1250 Hz bestimmten Absorptionskoeffizienten von mindestens 0,35, bevorzugt von mindestens 0,4 auf.

In einer vorteilhaften Ausführungsform weist das selbsttragende Schallschutzformteil einen gemäß der Norm DIN 10 534-2 in einem Frequenzbereich von 1250 Hz bis 3150 Hz bestimmten Absorptionskoeffizienten von mindestens 0,30, bevorzugt von mindestens 0,35, und am meisten bevorzugt von mindestens 0,40 auf.

Dadurch wird der technische Vorteil erreicht, dass ein entsprechend wirksamer Absorptionskoeffizient ermöglicht, dass das selbsttragende Schallschutzformteil vorteilhaft im Bereich der Schallabsorption eingesetzt werden kann.

In einer vorteilhaften Ausführungsform sind die offenzelligen Schaumstoffflocken und/oder Schwerfolienpartikel gleichmäßig in dem gesamten Trägermaterial verteilt und eingebettet.

Dadurch wird der technische Vorteil erreicht, dass durch die gleichmäßige Verteilung und Einbettung der offenzelligen Schaumstoffflocken und/oder Schwerfolienpartikel in dem gesamten Trägermaterial eine einfache Herstellbarkeit des selbsttragenden Schallschutzformteils bei einem gleichzeitig wirksamen Schallschutz ermöglicht werden kann.

In einer vorteilhaften Ausführungsform weist das Trägermaterial zumindest einen ersten Bereich und zumindest einen zweiten Bereich auf, wobei in dem ersten Bereich die offenzelligen Schaumstoffflocken und/oder Schwerfolienpartikel verteilt und eingebettet sind, und wobei in dem zweiten Bereich der Gewichtsanteil der offenzelligen Schaumstoffflocken und/oder Schwerfolienpartikel geringer ist als der Gewichtsanteil der offenzelligen Schaumstoffflocken und/oder Schwerfolienpartikel in dem ersten Bereich.

Dadurch wird der technische Vorteil erreicht, dass die offenzelligen Schaumstoffflocken und/oder Schwerfolienpartikel gezielt in den spezifischen ersten Bereich des Trägermaterials eingebracht werden, um eine wirksame gerichtete Schallabsorption des selbsttragenden Schallschutzformteils zu erreichen.

In einer vorteilhaften Ausführungsform umfasst der erste Bereich eine schallabsorbierende Oberfläche des selbsttragenden Schallschutzformteils, wobei die schallabsorbierende Oberfläche insbesondere zu einer Schallquelle ausrichtbar ist, und/oder umfasst der zweite Bereich eine rückseitige Oberfläche des selbsttragenden Schallschutzformteils, wobei die rückseitige Oberfläche insbesondere der schallabsorbierenden Oberfläche abgewandt ist.

Dadurch wird der technische Vorteil erreicht, dass der erste Bereich, in welchem die offenzelligen Schaumstoffflocken und/oder Schwerfolienpartikel in dem Trägermaterial vorhanden sind, sich an der schallabsorbierenden Oberfläche befindet, also gezielt in der Region des selbsttragenden Schallschutzformteils, welche zu der Schallquelle ausgerichtet ist, und wo eine Schallabsorption besonders wichtig ist. Der zweite Bereich des Trägermaterials, in welchem der Gewichtsanteil der offenzelligen Schaumstoffflocken und/oder Schwerfolienpartikel geringer als der Gewichtsanteil der offenzelligen Schaumstoffflocken und/oder Schwerfolienpartikel in dem ersten Bereich ist, ist hierbei insbesondere der schallabsorbierenden Oberfläche, bzw. der Schallquelle abgewandt, so dass in diesem Bereich eine wirksame Schallabsorption weniger notwendig ist.

Insbesondere sind in dem zweiten Bereich keine offenzelligen Schaumstoffflocken und/oder Schwerfolienpartikel vorhanden.

Insbesondere erstreckt sich der erste Bereich des Trägermaterials abschnittsweise von der schallabsorbierenden Oberfläche in das Innere des selbsttragenden Schallschutzformteils.

Insbesondere erstreckt sich der zweite Bereich des Trägermaterials abschnittsweise von einer der schallabsorbierenden Oberfläche abgewandten rückseitigen Oberfläche in das Innere des selbsttragenden Schallschutzformteils.

In einer vorteilhaften Ausführungsform ist das selbsttragende Schallschutzformteil als eine Leiste, eine Platte, als ein Gehäuse, oder als eine Verkleidung ausgebildet.

Dadurch wird der technische Vorteil erreicht, dass sich vorteilhafte Geometrien für das selbsttragende Schallschutzformteil vorteilhaft abbilden lassen.

Die Geometrien der Leiste, der Platte, des Gehäuses, oder der Verkleidung sind beliebig wählbar.

In einer vorteilhaften Ausführungsform ist das selbsttragende Schallschutzformteil als ein Heizungs-, Lüftungs- und Klimaanlagen-Bauteil (HVAC-Bauteil), als ein Wärmepumpenbauteil, als ein Luftführungsbauteil, als ein Hauswandungsbauteil, oder als ein bauschallabsorbierendes Bauteil ausgebildet.

Dadurch wird der technische Vorteil erreicht, dass sich das selbsttragende Schallschutzformteil in einer Vielzahl von technischen Gebieten, bzw. Einsatzszenarien verwenden lässt.

Gemäß einem zweiten Aspekt der Erfindung wird die Aufgabe durch ein Verfahren zum Herstellen eines selbsttragenden Schallschutzformteils zur Schallabsorption gelöst, wobei das Verfahren die folgenden Verfahrensschritte umfasst: Bereitstellen einer Negativform für ein selbsttragendes Schallschutzformteil, Einbringen von Trägermaterial aus Partikelschaumstoff in die Negativform, Einbringen von offenzelligen Schaumstoffflocken aus Polypropylen (PP), Polyurethan (PU), Polyethylen (PE), Melaminharzschaum oder Mischungen davon und/oder Schwerfolienpartikel aus Bitumen und/oder gefülltem Elastomer in die Negativform, Erwärmen der Mischung aus Trägermaterial und offenzelligen Schaumstoffflocken und/oder Schwerfolienpartikel in der Negativform, um das selbsttragende Schallschutzformteil herzustellen, wobei in dem Trägermaterial die offenzelligen Schaumstoffflocken und/oder Schwerfolienpartikel verteilt und eingebettet sind, Abkühlen des selbsttragenden Schallschutzformteils in der Negativform, und Entnehmen des selbsttragenden Schallschutzformteils aus der Negativform.

Dadurch wird der technische Vorteil erreicht, dass ein selbsttragendes Schallschutzformteil aus dem entsprechenden Verbundmaterial vorteilhaft bereitgestellt werden kann.

Insbesondere umfasst das Einbringen von Trägermaterial und/oder das Einbringen der offenzelligen Schaumstoffflocken und/oder Schwerfolienpartikel in die Negativform die Beaufschlagung des Trägermaterials und/oder der offenzelligen Schaumstoffflocken durch heißen Wasserdampf mit Überdruck.

Insbesondere werden das Einbringen von Trägermaterial in die Negativform und das Einbringen der offenzelligen Schaumstoffflocken und/oder Schwerfolienpartikel in die Negativform in einem gemeinsamen Verfahrensschritt durchgeführt. Alternativ werden insbesondere das Einbringen von Trägermaterial in die Negativform und das Einbringen der offenzelligen Schaumstoffflocken und/oder Schwerfolienpartikel in die Negativform in unterschiedlichen Verfahrensschritten durchgeführt, wobei insbesondere zuerst das Trägermaterial in die Negativform eingebracht wird, und wobei insbesondere anschließend die offenzelligen Schaumstoffflocken und/oder Schwerfolienpartikel in die Negativform eingebracht werden.

Insbesondere wird zwischen dem Einbringen der offenzelligen Schaumstoffflocken und/oder Schwerfolienpartikel in die Negativform und dem Erwärmen der Mischung aus Trägermaterial und offenzelligen Schaumstoffflocken und/oder Schwerfolienpartikel in der Negativform, ein weiterer Verfahrensschritt durchgeführt, umfassend Entfernen von Wasserdampf aus der Negativform.

Insbesondere umfasst das Erwärmen der Mischung aus Trägermaterial und offenzelligen Schaumstoffflocken und/oder Schwerfolienpartikel in der Negativform zuerst das Querbedampfen der Mischung in der Negativform und das sich daran anschließende bodenseitige Bedampfen der Negativform unter Beibehaltung eines konstanten Drucks.

Insbesondere umfasst das Abkühlen des selbsttragenden Schallschutzformteils in der Negativform, das Anlegen eines Vakuums an die Negativform.

Insbesondere umfasst das Entnehmen des selbsttragenden Schallschutzformteils aus der Negativform das Entfernen des selbsttragenden Schallschutzformteils mit einem Greifwerkzeug, insbesondere einem Vakuumgreifer.

Die für das selbsttragende Schallschutzformteil gemäß dem ersten Aspekt angeführten Ausführungsformen sind ebenso Ausführungsformen für das Verfahren zum Herstellen eines selbsttragenden Schallschutzformteils gemäß dem zweiten Aspekt, und umgekehrt.

Ausführungsbeispiele der Erfindung sind in den Zeichnungen dargestellt und werden im Folgenden näher beschrieben.

Es zeigen:
- Fig. 1: eine perspektivische Ansicht eines selbsttragenden Schallschutzformteils zur Schallabsorption gemäß einer ersten Ausführungsform;
- Fig. 2: eine perspektivische Ansicht eines selbsttragenden Schallschutzformteils zur Schallabsorption gemäß einer zweiten Ausführungsform;
- Fig. 3: eine elektronenmikroskopische Aufnahme des selbsttragenden Schallschutzformteils gemäß der ersten Ausführungsform;
- Fig. 4: eine graphische Darstellung einer Schallabsorptionsmessung des selbsttragenden Schallschutzformteils gemäß der ersten Ausführungsform; und
- Fig. 5: eine schematische Darstellung eines Verfahrens zum Herstellen eines selbsttragenden Schallschutzformteils gemäß einer Ausführungsform.

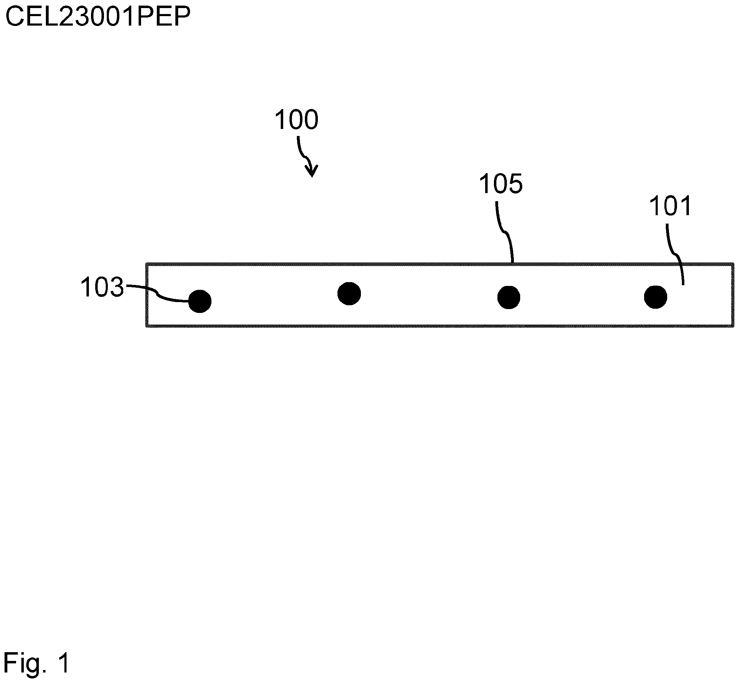

Fig. 1 zeigt eine perspektivische Ansicht eines selbsttragenden Schallschutzformteils zur Schallabsorption gemäß einer ersten Ausführungsform.

Aus dem Stand der Technik ist eine Vielzahl von Bauteilen aus expandiertem Polypropylen (EPP) und vergleichbaren Materialien bekannt, welche beispielsweise auf den technischen Gebieten der Wärmeisolation, der Mehrwegverpackung und der Automobilausstattung eingesetzt werden. Entsprechende herkömmlich bekannte aus expandiertem Polypropylen (EPP) und vergleichbaren Materialien bestehende Bauteile weisen eine vorteilhafte Festigkeit, insbesondere Tragfähigkeit und Strukturfestigkeit, eine vorteilhafte wärmedämmende Wirkung, eine vorteilhafte Energieabsorption, ein geringes Gewicht, eine vorteilhafte Maßhaltigkeit und eine wirksame Dichtigkeit gegenüber Wasser und Luft auf.

Aus diesem Grund eigenen sich entsprechende herkömmlich bekannte aus expandiertem Polypropylen (EPP) und vergleichbaren Materialien bestehende Bauteile für den Einsatz als Heizungs-, Lüftungs-, und Klimaanlagenbauteile (HVAC-Bauteil), da hierbei insbesondere große Gehäuse und Luftführungen vorteilhaft und mit geringen Kosten gefertigt werden können.

Weniger geeignet sind entsprechende herkömmlich bekannte aus expandiertem Polypropylen (EPP) und vergleichbaren Materialien bestehende Bauteile im Bereich des Schallschutzes, da beispielsweise expandiertes Polypropylen (EPP) eine geschlossenzellige Raumstruktur aufweist, welche nach dem Formvorgang, bzw. Sintervorgang bei einem Druck von ca. 3 bar, zu luftdichten Konglomeraten verarbeitet werden, welche keine vorteilhaften schallabsorbierenden Eigenschaften aufweisen.

Das in der Fig. 1 lediglich schematisch dargestellte selbsttragende Schallschutzformteil 100 gemäß der vorliegenden Erfindung umfasst jedoch nicht nur ein entsprechendes Trägermaterial 101 aus Partikelschaumstoff, sondern ist dadurch gekennzeichnet, dass in dem Trägermaterial 101 offenzellige Schaumstoffflocken 103 verteilt und eingebettet sind, wobei die offenzelligen Schaumstoffflocken 103 Polypropylen (PP), Polyurethan (PU), Polyethylen (PE), Melaminharzschaum und Mischungen davon umfassen. Auch wenn dies in der Fig. 1 nicht dargestellt ist, können alternativ oder zusätzlich auch Schwerfolienpartikel aus Bitumen und/oder gefülltem Elastomer in dem Trägermaterial 101 verteilt und eingebettet sein.

Somit besteht das selbsttragende Schallschutzformteil 100 gemäß der vorliegenden Erfindung aus einem Hybridmaterial, bzw. Verbundmaterial, umfassend als Trägermaterial 101 den Partikelschaumstoff, und den in dem Trägermaterial 101 verteilten und eingebetteten offenzelligen Schaumstoffflocken 103 und/oder Schwerfolienpartikel.

Der Partikelschaumstoff des Trägermaterials 101 ist insbesondere ausgewählt aus der Gruppe umfassend expandiertes Polypropylen (EPP), expandiertes Polyethylen (EPE), expandiertes Polystyrol (EPS), expandiertes thermoplastisches Polyurethan (E-TPU), expandiertes thermoplastisches Polyolefin (E-TPO), eine Mischung aus expandiertem Polystyrol (EPS) und Polyethylen (PE), eine Mischung aus expandiertem Polystyrol (EPS) und Polypropylen (PP), eine Mischung aus expandiertem Polypropylen (EPP) und expandiertem Polyethylen (EPE), sowie Mischungen davon.

Die Schwerfolienpartikel umfassen insbesondere zumindest ein Elastomer, in welches Füllstoffe, bevorzugt anorganische Füllstoffe, weiter bevorzugt Ruß, Silica, Aluminiumhydroxid und/oder Magnesiumhydroxid, eingebracht sind.

Die Schwerfolienpartikel weisen insbesondere eine Partikelgröße zwischen 3 mm und 12 mm auf, und/oder die Schwerfolienpartikel weisen insbesondere eine Dichte zwischen 1800 kg/m³ und 2300 kg/m³ auf.

Durch den entsprechenden Verbund aus Partikelschaumstoff als Trägermaterial 101 und den in dem Trägermaterial 101 verteilten und eingebetteten offenzelligen Schaumstoffflocken 103 und/oder Schwerfolienpartikel kann das Material zwar die Dichtigkeit gegenüber Wasser und Luft verlieren. Durch die entsprechende Vielzahl an Hohlräumen innerhalb der offenzelligen Schaumstoffflocken 103 wird jedoch das Schallabsorptionsvermögen des Materials derart verbessert, dass ein vollkommen neues Einsatzgebiet des Materials als Schallschutzformteil 100 ermöglicht wird.

Hierbei weisen die offenzelligen Schaumstoffflocken 103 jeweils eine Vielzahl von offenen Schaumstoffzellen auf, welche diffusionsoffen mit einem Außenbereich der offenzelligen Schaumstoffflocken verbunden sind. Somit können Schallwellen von außerhalb des selbsttragenden Schallschutzformteils 100 in das Zelleninnere der offenen Schaumstoffzellen eindringen und die entsprechende durch die Schallwellen vermittelte Energie an die Zellenwandung abgeben, so dass eine Umwandung der durch die Schallwellen vermittelten Energie in Wärme stattfindet, welche die hervorragenden schallabsorbierenden Eigenschaften des selbsttragenden Schallschutzformteils 100 der vorliegenden Erfindung ermöglicht.

Insbesondere weisen die offenzelligen Schaumstoffflocken 103 einen Durchmesser zwischen 3 mm und 12 mm auf.

Insbesondere weisen die offenzelligen Schaumstoffflocken 103 eine Dichte von 6 kg/m³ bis 60 kg/m³ auf.

Die offenzelligen Schaumstoffflocken 103 können hierbei insbesondere mit dem Trägermaterial 101 verbunden sein, insbesondere stoffschlüssig verbunden sein, und/oder können hierbei in dem Trägermaterial 101 eingebettet sein, so dass sich je nach Anwendungsfall unterschiedliche Strukturen ergeben.

Das in der Fig. 1 dargestellte Schallschutzformteil 100 ist jedoch als ein selbsttragendes Schallschutzformteil 100 ausgebildet, welches somit die bei der Herstellung des Schallschutzformteils 100 gewählte Form von selbst beibehält, ohne dass Verstärkungen oder stützende Bauteile aus stabilisierenden Materialien angebracht werden müssen. Damit kann das selbsttragende Schallschutzformteil 100 gemäß der vorliegenden Erfindung in nahezu jede denkbare geometrische Form gebracht werden, und die technischen Einsatzgebiete des selbsttragenden Schallschutzformteils 100 sind nahezu unbegrenzt.

Beispielsweise kann das selbsttragende Schallschutzformteil 100 als eine Leiste, eine Platte, als ein Gehäuse, oder als eine Verkleidung mit einer beliebigen geometrischen Form ausgebildet sein.

Beispielsweise kann das selbsttragende Schallschutzformteil 100 als ein Heizungs-, Lüftungs- und Klimaanlagen-Bauteil (HVAC-Bauteil), als ein Wärmepumpenbauteil, als ein Luftführungsbauteil, als ein Hauswandungsbauteil, oder als ein bauschallabsorbierendes Bauteil ausgebildet sein.

Hierbei können das Material, die Größe, die Dichte und die Menge der in das Trägermaterial 101 eingebrachten offenzelligen Schaumstoffflocken 103 und/oder Schwerfolienpartikel derart gewählt werden, dass ein Optimum zwischen Formfestigkeit und dem Schallabsorptionsvermögen des selbsttragenden Schallschutzformteils 100 erzielt wird.

Das selbsttragende Schallschutzformteil 100 weist insbesondere eine schallabsorbierende Oberfläche 105 auf, welche insbesondere dadurch charakterisiert ist, dass diese zu der in Fig. 1 nicht dargestellten Schallquelle ausgerichtet ist, so dass die von der Schallquelle emittierten Schallwellen frontal auf die schallabsorbierende Oberfläche 105 auftreffen. Insbesondere beträgt an der schallabsorbierenden Oberfläche 105 insbesondere der Flächenanteil der offenzelligen Schaumstoffflocken 103 und/oder Schwerfolienpartikel in dem Trägermaterial 101 zwischen 6% und 25%.

Die offenzelligen Schaumstoffflocken 103 und/oder Schwerfolienpartikel können, wie dies beispielsweise in der Fig. 1 gezeigt ist, gleichmäßig in dem gesamten Trägermaterial 101 verteilt und eingebettet sein.

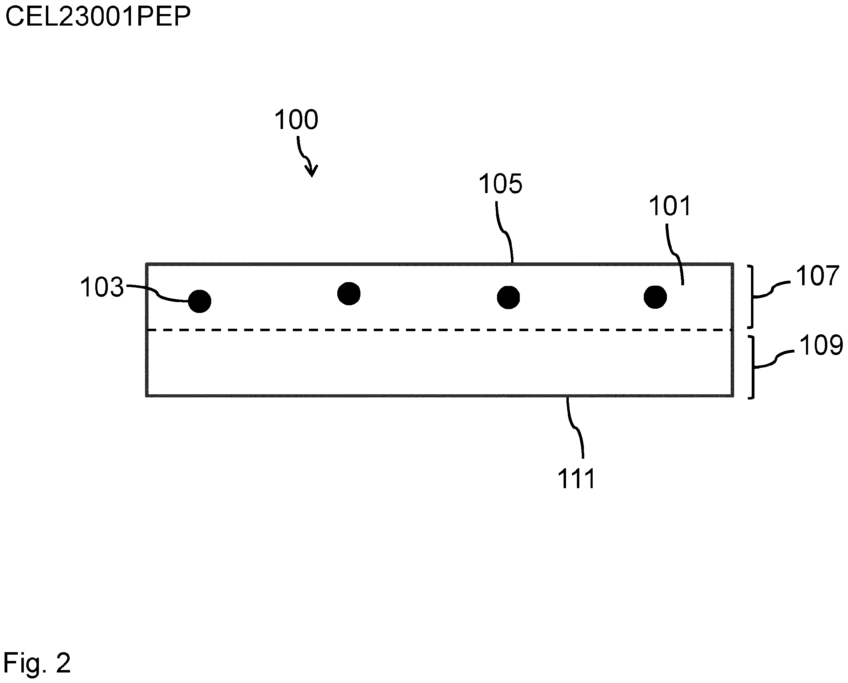

Fig. 2 zeigt eine perspektivische Ansicht eines selbsttragenden Schallschutzformteils zur Schallabsorption gemäß einer zweiten Ausführungsform.

Das in der Fig. 2 dargestellte selbsttragende Schallschutzformteil 100 gemäß der zweiten Ausführungsform unterscheidet sich von dem in der Fig. 2 dargestellten selbsttragenden Schallschutzformteil 100 gemäß der ersten Ausführungsform lediglich dadurch, dass das in der Fig. 2 dargestellte selbsttragende Schallschutzformteil 100 einen ersten Bereich 107 und einen zweiten Bereich 109 aufweist, in welchen das Trägermaterial 101 unterschiedliche Gewichtsanteile der offenzelligen Schaumstoffflocken 103 und/oder Schwerfolienpartikel aufweist.

Beispielsweise können die offenzelligen Schaumstoffflocken 103 und/oder Schwerfolienpartikel in dem ersten Bereich 107 des Trägermaterials 101 vorteilhaft gleichmäßig verteilt und eingebettet sein, und können die offenzelligen Schaumstoffflocken 103 und/oder Schwerfolienpartikel in dem zweiten Bereich 109 des Trägermaterials 101 überhaupt nicht vorhanden sein, bzw. können die offenzelligen Schaumstoffflocken 103 und/oder Schwerfolienpartikel in dem zweiten Bereich 109 des Trägermaterials 101 in einem deutlich geringeren Gewichtsanteil vorhanden sein, als dies in dem ersten Bereich 107 des Trägermaterials 101 der Fall ist.

Beispielsweise kann hier der erste Bereich 107 die schallabsorbierende Oberfläche 105 des selbsttragenden Schallschutzformteils 100 umfassen, und/oder kann sich der erste Bereich 107 von der schallabsorbierenden Oberfläche 105 in das selbsttragende Schallschutzformteil 100 erstrecken.

Beispielsweise kann hier der zweite Bereich 109 eine der schallabsorbierenden Oberfläche 105 abgewandte rückseitige Oberfläche 111 des selbsttragenden Schallschutzformteils 100 umfassen, und/oder kann sich der zweite Bereich 109 von der rückseitigen Oberfläche 111 in das selbsttragende Schallschutzformteil 100 erstrecken.

Natürlich ist die zweite Ausführungsform nicht auf die spezifische in Fig. 2 dargestellte Möglichkeit beschränkt, sondern das Trägermaterial 101 kann auch eine Vielzahl von ersten Bereichen 107 und/oder zweiten Bereichen 109 umfassen, welche zur Schalloptimierung optimiert in dem selbsttragenden Schallschutzformteil 100 verteilt sind.

Beispielsweise können sich auch in dem zweiten Bereich 109 des selbsttragenden Schallschutzformteils 100 offenzelligen Schaumstoffflocken 103 und/oder Schwerfolienpartikel befinden, wobei sich in dem Fall die Anzahl der offenzelligen Schaumstoffflocken 103 und/oder Schwerfolienpartikel in dem ersten Bereich 107 und in dem zweiten Bereich 109 unterscheiden, insbesondere dahingehend, dass in dem zweiten Bereich 109 eine geringere Anzahl von offenzelligen Schaumstoffflocken 103 und/oder Schwerfolienpartikel vorhanden ist, als in dem ersten Bereich 107.

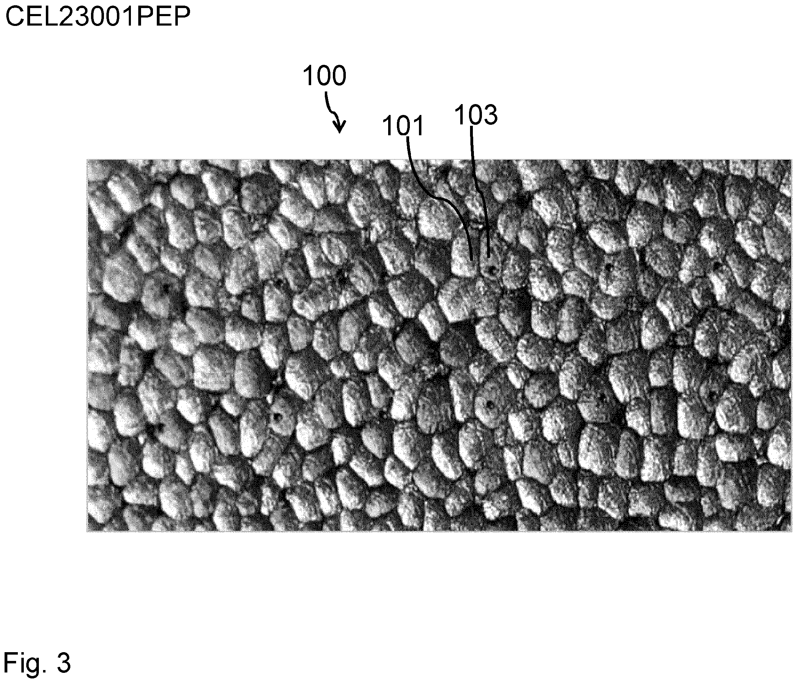

Fig. 3 zeigt eine elektronenmikroskopische Aufnahme des selbsttragenden Schallschutzformteils gemäß der ersten Ausführungsform.

In der Fig. 3 ist eine schallabsorbierende Oberfläche 105 des selbsttragenden Schallschutzformteils 100 gezeigt, wobei hierbei das Verbundmaterial umfassend das Trägermaterial 101 und die offenzelligen Schaumstoffflocken 103 gesintert wurde, so dass an der schallabsorbierenden Oberfläche 105 sowohl die offenzelligen Schaumstoffflocken 103 als auch das Trägermaterial 101 zu erkennen sind.

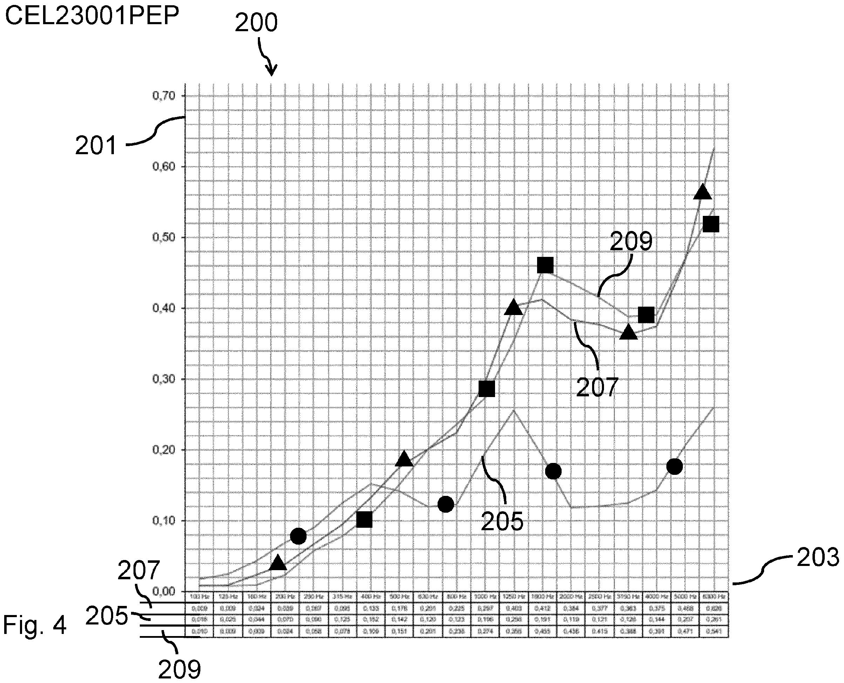

Fig. 4 zeigt eine graphische Darstellung einer Schallabsorptionsmessung des selbsttragenden Schallschutzformteils gemäß der ersten Ausführungsform.

In der Schallabsorptionsmessung 200 gemäß der Fig. 4 ist entlang der Ordinatenachse 201 der Absorptionskoeffizient angetragen, wobei entlang der Abszissenachsen 203 die Frequenz der Schallwellen in Herz angetragen ist. Bei der Schallabsorption beschreibt der in der Fig. 4 gezeigte Absorptionskoeffizient den Exponentialkoeffizienten der Abnahme der Intensität einer Schallwelle.

Die in der Fig. 4 gezeigten Schallabsorptionsmessungen wurden gemäß der Norm DIN 10 534-2 durchgeführt, wobei insbesondere der Teil 2 der genannten Norm relevant ist, 2-Mikrofontechnik für Schallabsorptionsgrad und Oberflächenimpedanz bei senkrechtem Schalleinfall.

In der Fig. 4 ist eine erste Kurve 205 mit Kreismarkierungen dargestellt, welche auf einer Schallabsorptionsmessung 200 eines herkömmlichen Bauteils aus einem EPP-Trägermaterial 101 ohne offenzellige Schaumstoffflocken 103 beruht, und daher ein Vergleichsbeispiel umfasst.

Die in der Fig. 4 dargestellte zweite Kurve 207 mit Dreieckmarkierungen und dritte Kurve 309 mit Quadratmarkierungen hingegen basieren auf einer Schallabsorptionsmessung 200 eines erfindungsgemäßen schallabsorbierenden Schallschutzformteils 100 mit einem EPP-Trägermaterial 101, in welchem offenzellige Schaumstoffflocken 103 mit einem Flächenanteil von 12% (für die zweite Kurve 207), bzw. von 18% (für die dritte Kurve 209) verteilt und eingebettet sind.

Unterhalb der Graphen sind für die erste Kurve 205, zweite Kurve 207 und dritte Kurve 209 zudem für die jeweiligen Frequenzen der Schallwellen die entsprechenden Absorptionskoeffizienten in einer Tabelle zusammengefasst.

So beträgt beispielsweise der bei einer Frequenz von 1250 Hz bestimmte Absorptionskoeffizient gemäß der ersten Kurve 205 des Vergleichsbeispiels lediglich 0,256, wohingegen der Absorptionskoeffizient gemäß der zweiten Kurve 207 einen vorteilhaften Wert von 0,403 und der Absorptionskoeffizient gemäß der dritten Kurve 209 einen vorteilhaften Wert von 0,355 aufweist.

Somit ist belegt, dass der Verbund aus Trägermaterial 101 und offenzelligen Schaumstoffflocken 103 gemäß der zweiten Kurve 207 und dritten Kurve 209 im Vergleich zum Vergleichsbeispiel gemäß der ersten Kurve 205 ein größeres Schallabsorptionsvermögen aufweist.

Bevorzugt weist das selbsttragende Schallschutzformteil 100 einen gemäß der Norm DIN 10 534-2 bei einer Frequenz von 1250 Hz bestimmten Absorptionskoeffizienten von mindestens 0,35, bevorzugt von mindestens 0,4 auf.

Bevorzugt weist das selbsttragende Schallschutzformteil 100 einen gemäß der Norm DIN 10 534-2 in einem Frequenzbereich von 1250 Hz bis 3150 Hz bestimmten Absorptionskoeffizienten von mindestens 0,30, bevorzugt von mindestens 0,35, am meisten bevorzugt von mindestens 0,40 auf.

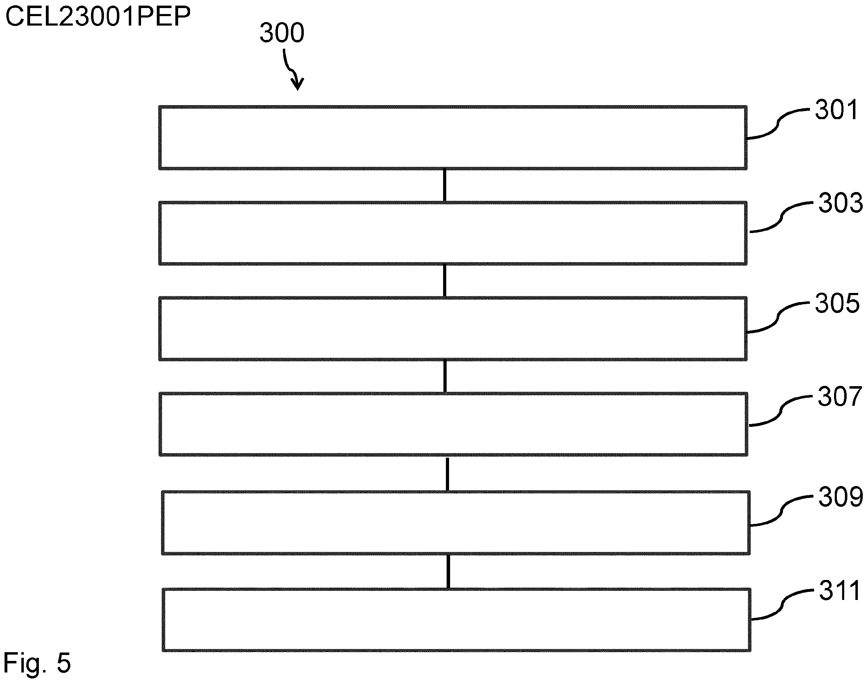

Fig. 5 zeigt eine schematische Darstellung eines Verfahrens zum Herstellen eines selbsttragenden Schallschutzformteils gemäß einer Ausführungsform.

Das Verfahren 300 umfasst als ersten Verfahrensschritt das Bereitstellen 301 einer Negativform für ein selbsttragendes Schallschutzformteil 100.

Das Verfahren 300 umfasst als zweiten Verfahrensschritt das Einbringen 303 von Trägermaterial 101 aus Partikelschaumstoff in die Negativform.

Das Verfahren 300 umfasst als dritten Verfahrensschritt das Einbringen 305 von offenzelligen Schaumstoffflocken 103 aus Polypropylen (PP), Polyurethan (PU), Polyethylen (PE), Melaminharzschaum oder Mischungen davon und/oder Schwerfolienpartikel aus Bitumen und/oder gefülltem Elastomer in die Negativform.

Das Verfahren 300 umfasst als vierten Verfahrensschritt das Erwärmen 307 der Mischung aus Trägermaterial 101 und offenzelligen Schaumstoffflocken 103 und/oder Schwerfolienpartikeln in der Negativform, um das selbsttragende Schallschutzformteil 100 herzustellen, wobei in dem Trägermaterial 101 die offenzelligen Schaumstoffflocken 103 und/oder Schwerfolienpartikeln verteilt und eingebettet sind.

Das Verfahren 300 umfasst als fünften Verfahrensschritt das Abkühlen 309 des selbsttragenden Schallschutzformteils 100 in der Negativform.

Das Verfahren 300 umfasst als sechsten Verfahrensschritt das Entnehmen 311 des selbsttragenden Schallschutzformteils 100 aus der Negativform.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder in den Figuren gezeigten Merkmale nicht beschränkt.

### BEZUGSZEICHENLISTE

- 100: Selbsttragendes Schallschutzformteil
- 101: Trägermaterial
- 103: Offenzellige Schaumstoffflocken
- 105: Schallabsorbierende Oberfläche des selbsttragenden Schallschutzformteils
- 107: Erster Bereich des selbsttragenden Schallschutzformteils
- 109: Zweiter Bereich des selbsttragenden Schallschutzformteils
- 111: Rückseitige Oberfläche des selbsttragenden Schallschutzformteils
- 103: Zweite Oberseite des selbsttragenden Strukturbauteils
- 105: Erste Oberseite des selbsttragenden Strukturbauteils
- 107: Schallabsorbierendes Bauteil
- 109: Schallabsorbierende Oberfläche
- 111: Trägermaterial
- 200: Schallabsorptionsmessung
- 201: Ordinatenachse
- 203: Abszissenachse
- 205: Erste Kurve
- 207: Zweite Kurve
- 209: Dritter Kurve
- 300: Verfahren zum Herstellen eines selbsttragenden Schallschutzformteils
- 301: Erster Verfahrensschritt: Bereitstellen einer Negativform für ein selbsttragendes Schallschutzformteil
- 303: Zweiter Verfahrensschritt: Einbringen von Trägermaterial aus Partikelschaumstoff in die Negativform
- 305: Dritter Verfahrensschritt: Einbringen von offenzelligen Schaumstoffflocken und/oder Schwerfolienpartikel in die Negativform
- 307: Vierter Verfahrensschritt: Erwärmen der Mischung aus Trägermaterial und offenzelligen Schaumstoffflocken in der Negativform, um das selbsttragende Schallschutzformteil herzustellen
- 309: Fünfter Verfahrensschritt: Abkühlen des selbsttragenden Schallschutzformteils in der Negativform
- 311: Sechster Verfahrensschritt: Entnehmen des selbsttragenden Schallschutzformteils aus der Negativform

## Patentansprüche

1. Selbsttragendes Schallschutzformteil (100) zur Schallabsorption, umfassend ein Trägermaterial (101) aus Partikelschaumstoff,
**dadurch gekennzeichnet, dass** in dem Trägermaterial (101) offenzellige Schaumstoffflocken (103) und/oder Schwerfolienpartikel verteilt und eingebettet sind, wobei die offenzelligen Schaumstoffflocken (103) Polypropylen (PP), Polyurethan (PU), Polyethylen (PE), Melaminharzschaum und Mischungen davon umfassen, und/oder wobei die Schwerfolienpartikel Bitumen und/oder gefülltes Elastomer umfassen.

2. Selbsttragendes Schallschutzformteil (100) nach Anspruch 1, **dadurch gekennzeichnet, dass** der Partikelschaumstoff ausgewählt ist aus der Gruppe umfassend expandiertes Polypropylen (EPP), expandiertes Polyethylen (EPE), expandiertes Polystyrol (EPS), expandiertes thermoplastisches Polyurethan (E-TPU), expandiertes thermoplastisches Polyolefin (E-TPO), eine Mischung aus expandiertem Polystyrol (EPS) und Polyethylen (PE), eine Mischung aus expandiertem Polystyrol (EPS) und Polypropylen (PP), eine Mischung aus expandiertem Polypropylen (EPP) und expandiertem Polyethylen (EPE), sowie Mischungen davon.

3. Selbsttragendes Schallschutzformteil (100) nach Anspruch 1 oder 2, **dadurch gekennzeichnet, dass** die als gefüllte Elastomere ausgewählten Schwerfolienpartikel zumindest ein Elastomer, in welches Füllstoffe, bevorzugt anorganische Füllstoffe, weiter bevorzugt Ruß, Silica, Aluminiumhydroxid und/oder Magnesiumhydroxid, eingebracht sind, umfassen.

4. Selbsttragendes Schallschutzformteil (100) nach einem der vorangehenden Ansprüche 3, **dadurch gekennzeichnet, dass** die Schwerfolienpartikel eine Partikelgröße zwischen 3 mm und 12 mm aufweisen, und/oder dass die Schwerfolienpartikel eine Dichte zwischen 1800 kg/m³ und 2300 kg/m³ aufweisen.

5. Selbsttragendes Schallschutzformteil (100) nach einem der vorangehenden Ansprüche, **dadurch gekennzeichnet, dass** die offenzelligen Schaumstoffflocken (103) jeweils eine Vielzahl von offenen Schaumstoffzellen aufweisen, welche diffusionsoffen mit einem Außenbereich der offenzelligen Schaumstoffflocken (103) verbunden sind.

6. Selbsttragendes Schallschutzformteil (100) nach einem der vorangehenden Ansprüche, **dadurch gekennzeichnet, dass** die offenzelligen Schaumstoffflocken (103) und/oder Schwerfolienpartikel mit dem Trägermaterial (101) verbunden sind, insbesondere stoffschlüssig verbunden und/oder eingebettet sind.

7. Selbsttragendes Schallschutzformteil (100) nach einem der vorangehenden Ansprüche, **dadurch gekennzeichnet, dass** die offenzelligen Schaumstoffflocken (103) jeweils einen Durchmesser zwischen 3 mm und 12 mm aufweisen.

8. Selbsttragendes Schallschutzformteil (100) nach einem der vorangehenden Ansprüche, **dadurch gekennzeichnet, dass** das selbsttragende Schallschutzformteil (100) eine schallabsorbierende Oberfläche (105) aufweist, welche insbesondere zu einer Schallquelle ausrichtbar ist, wobei an der schallabsorbierenden Oberfläche (105) insbesondere der Flächenanteil der offenzelligen Schaumstoffflocken (103) und/oder Schwerfolienpartikel in dem Trägermaterial (101) zwischen 6% und 25% beträgt.

9. Selbsttragendes Schallschutzformteil (100) nach einem der vorangehenden Ansprüche, **dadurch gekennzeichnet, dass** die offenzelligen Schaumstoffflocken (103) eine Dichte von 6 kg/m³ bis 60 kg/m³ aufweisen.

10. Selbsttragendes Schallschutzformteil (100) nach einem der vorangehenden Ansprüche, **dadurch gekennzeichnet, dass** das selbsttragende Schallschutzformteil (100) einen gemäß der Norm DIN 10 534-2 bei einer Frequenz von 1250 Hz bestimmten Absorptionskoeffizienten von mindestens 0,35, bevorzugt von mindestens 0,4 aufweist.

11. Selbsttragendes Schallschutzformteil (100) nach einem der vorangehenden Ansprüche, **dadurch gekennzeichnet, dass** die offenzelligen Schaumstoffflocken (103) und/oder Schwerfolienpartikel gleichmäßig in dem gesamten Trägermaterial (101) verteilt und eingebettet sind.

12. Selbsttragendes Schallschutzformteil (100) nach einem der vorangehenden Ansprüche 1 bis 10, **dadurch gekennzeichnet, dass** das Trägermaterial (101) zumindest einen ersten Bereich (107) und zumindest einen zweiten Bereich (109) aufweist, wobei in dem ersten Bereich (107) die offenzelligen Schaumstoffflocken (103) und/oder Schwerfolienpartikel verteilt und eingebettet sind, und wobei in dem zweiten Bereich (109) der Gewichtsanteil der offenzelligen Schaumstoffflocken (103) und/oder Schwerfolienpartikel geringer als der Gewichtsanteil der offenzelligen Schaumstoffflocken (103) und/oder Schwerfolienpartikel in dem ersten Bereich (107) ist.

13. Selbsttragendes Schallschutzformteil (100) nach Anspruch 12, **dadurch gekennzeichnet, dass** der erste Bereich (107) eine schallabsorbierende Oberfläche (105) des selbsttragenden Schallschutzformteils (100) umfasst, wobei die schallabsorbierende Oberfläche (105) insbesondere zu einer Schallquelle ausrichtbar ist, und/oder dass der zweite Bereich (109) eine rückseitige Oberfläche (111) des selbsttragenden Schallschutzformteils (100) umfasst, wobei die rückseitige Oberfläche (111) insbesondere der schallabsorbierenden Oberfläche (105) abgewandt ist.

14. Selbsttragendes Schallschutzformteil (100) nach einem der vorangehenden Ansprüche, **dadurch gekennzeichnet, dass** das selbsttragende Schallschutzformteil (100) als eine Leiste, eine Platte, als ein Gehäuse, oder als eine Verkleidung ausgebildet ist, und/oder dass das selbsttragende Schallschutzformteil (100) als ein Heizungs-, Lüftungs- und Klimaanlagen-Bauteil (HVAC-Bauteil), als ein Wärmepumpenbauteil, als ein Luftführungsbauteil, als ein Hauswandungsbauteil, oder als ein bauschallabsorbierendes Bauteil ausgebildet ist.

15. Verfahren (300) zum Herstellen eines selbsttragenden Schallschutzformteils (100) zur Schallabsorption, wobei das Verfahren die folgenden Verfahrensschritte umfasst:
Bereitstellen (301) einer Negativform für ein selbsttragendes Schallschutzformteil (100),
Einbringen (303) von Trägermaterial (101) aus Partikelschaumstoff in die Negativform,
Einbringen (305) von offenzellige Schaumstoffflocken (103) aus Polypropylen (PP), Polyurethan (PU), Polyethylen (PE), Melaminharzschaum oder Mischungen davon und/oder Schwerfolienpartikel aus Bitumen und/oder gefülltem Elastomer in die Negativform,
Erwärmen (307) der Mischung aus Trägermaterial (101) und offenzelligen Schaumstoffflocken (103) und/oder Schwerfolienpartikel in der Negativform, um das selbsttragende Schallschutzformteil (100) herzustellen, wobei in dem Trägermaterial (101) die offenzelligen Schaumstoffflocken (103) und/oder die Schwerfolienpartikel verteilt und eingebettet sind,
Abkühlen (309) des selbsttragenden Schallschutzformteils (100) in der Negativform, und
Entnehmen (311) des selbsttragenden Schallschutzformteils (100) aus der Negativform.
